Europäisches Patentamt

European Patent Office

Office européen des brevets

(11) Publication number: **0 075 488**
**B1**

# (12) EUROPEAN PATENT SPECIFICATION

(45) Date of publication of patent specification: **30.07.86**

(21) Application number: **82304999.4**

(22) Date of filing: **22.09.82**

(51) Int. Cl.⁴: **B 65 G 27/08,** G 01 G 13/08, B 06 B 1/00

(54) Vibratory conveyor apparatus.

(30) Priority: **22.09.81 JP 140767/81**

(43) Date of publication of application:
**30.03.83 Bulletin 83/13**

(45) Publication of the grant of the patent:
**30.07.86 Bulletin 86/31**

(84) Designated Contracting States:
**DE FR GB IT**

(56) References cited:
**DE-A-2 646 988**
**DE-C- 591 471**
**DE-C- 625 492**
**GB-A- 776 699**
**US-A-3 087 603**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Kitagawa, Kazumi**
**423-3, Ogaki Rittou-cho**
**Kurita-gun Shiga (JP)**

(74) Representative: **Fane, Christopher Robin King et al**
**HASELTINE LAKE & CO. Hazlitt House**
**28 Southampton Buildings**
**Chancery Lane**
**London, WC2A 1AT (GB)**

EP 0 075 488 B1

Courier Press, Leamington Spa, England.

## Description

This invention relates to a vibratory conveyor apparatus according to the preamble of claim 1.

A vibratory conveyor can be used in general for transporting articles and, in the case of a computerized combinatorial weighing apparatus, can be used for transporting articles to be weighed to respective weighing hoppers. Such a conveyor is so designed and constructed that a supply trough thereof is set into vibration by operation of a vibrator for transporting the articles on the trough. A conveyor of this kind is known from US—3087603. For realising smooth transport of the articles on the supply trough, it is desirable to employ support means such that vibration generated by the vibrator may be transmitted smoothly to the trough but not to members other than the trough. With a view to achieving this purpose, a known supply trough of this kind is mounted for vibratory movement on a base member which is itself resiliently supported on a stationary support structure by means of coil springs or the like. However, when using such an arrangement, conditions have been encountered in which the articles concerned are still not transported along the trough in a sufficiently smooth fashion. This has been found to be due to the fact that the coil springs may be subjected to bending stresses in addition to elastic elongation and retraction, which stresses can cause frequent changes in the vibratory modes of the coil springs and thereby affect the transmission of the vibratory force to the trough.

According to the present invention there is provided vibratory conveyor apparatus, comprising a supply trough, a base member on which the trough is mounted so as to be capable of longitudinal vibratory movement with respect thereto, vibrator means operable to bring about such movement of the trough so as to cause articles thereon to move in a feeding direction therealong when the apparatus is in use, and a stationary support structure on which the said base member is resiliently mounted, characterised in that the base member is mounted on the support structure by means of two leaf-springs which are spaced apart substantially longitudinally of the said trough, each leaf-spring having first and second limbs extending substantially longitudinally of the trough from an intermediate portion of the leaf-spring, the respective first limbs of the leaf-springs being secured to the said base member, and the respective second limbs being secured to the said support structure.

An embodiment of the invention can be constructed so that transmission of vibration from the vibrator to the trough is effected reliably so as to realise a desirably smooth transport of articles on the support trough. In such an embodiment the leaf-springs will be at least substantially free from undesired lateral bending.

Reference will now be made, by way of example, to the accompanying drawings, in which:

FIGURE 1 shows a diagrammatic side elevation of a computerized combinatorial weighing apparatus which can be adapted to use embodiments of the present invention;

FIGURE 2 shows a diagrammatic side elevation of a vibratory conveyor.

FIGURE 3 shows a diagrammatic side elevation of the conveyor of Figure 2 mounted in a conventional manner;

FIGURE 4 shows a diagrammatic side elevation of a preferred form of apparatus embodying the present invention; and

FIGURE 5 shows a sectional view taken along line IV—IV of Figure 4.

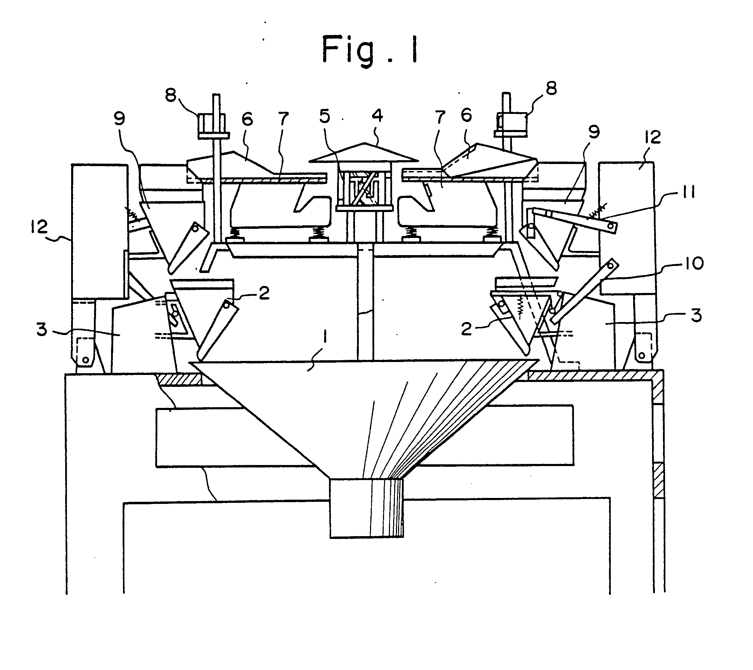

Figure 1 shows in side elevation a computerized combinatorial weighing apparatus in which embodiments of the present invention can advantageously be incorporated.

In this computerized combination weighing apparatus, a plurality of weighing hoppers 2 are mounted in a circular array above the circumference of the top opening of a collecting chute 1. Each weighing hopper 2 is operatively associated with a weighing machine 3 designed to weigh articles contained in the weighing hopper 2. A distribution table 4 for supply troughs 6 is supported on an electromagnetically operated vibrator 5 and is set into helical reciprocating rotation. The supply troughs 6 are mounted radially at the outer periphery of the distribution table 4. Sensors 8 are used for optically sensing the quantity of the articles received on the distribution table 4. A pool hopper 9 is provided between each weighing hopper 2 and the corresponding supply trough 6. Each weighing hopper 2 and the corresponding pool hopper 9 are provided with a drive unit 12 and levers 10, 11 adapted for opening and closing the hoppers 2, 9.

The computerized combination weighing apparatus thus constructed operates as follows.

The articles are supplied from the distribution table 4 through supply troughs 6 into pool hoppers 9 and thence into weighing hopper 2. The articles thus received in the weighing hoppers 2 are weighed by the weighing machine 3 associated therewith. Based on the weights measured by the weighing machines, a control unit, not shown, of the computerized combinatorial weighing apparatus performs a combinatorial weighing operation by comparing the result of each combinatorial adding operation performed on the article weights with a preset target weight and selecting the combination of articles, known as the best combination, that gives a total weight equal to the target weight or closest to the target weight. In this case, the number of articles in the combination may be arbitrary or predetermined, as desired. The control unit then operates to open the thus selected weighing hoppers 2 by the operation of the levers 10, 11 so that the articles giving said best combination are released into the collecting chute 1 from the weighing hoppers 2 to be discharged towards a packaging machine or bucket conveyor, not shown. This will leave the selected weighing hoppers 2 empty. Articles are then newly delivered from the corresponding pool hoppers into said weighing hoppers, leaving these pool hoppers empty, whereupon a new supply or articles is delivered from the distribution table 4 and the corresponding supply troughs 6. This weighing operation can be continued in this fashion by repeating the foregoing steps.

In the computerized combinatory weighing apparatus described above, the articles supplied from the distribution table 4 are received in the supply troughs 6 and selected ones of the troughs are vibrated by the electromagnetically operated vibrators 7 for transporting the articles from the corresponding supply troughs 6 into the corresponding pool hoppers 9.

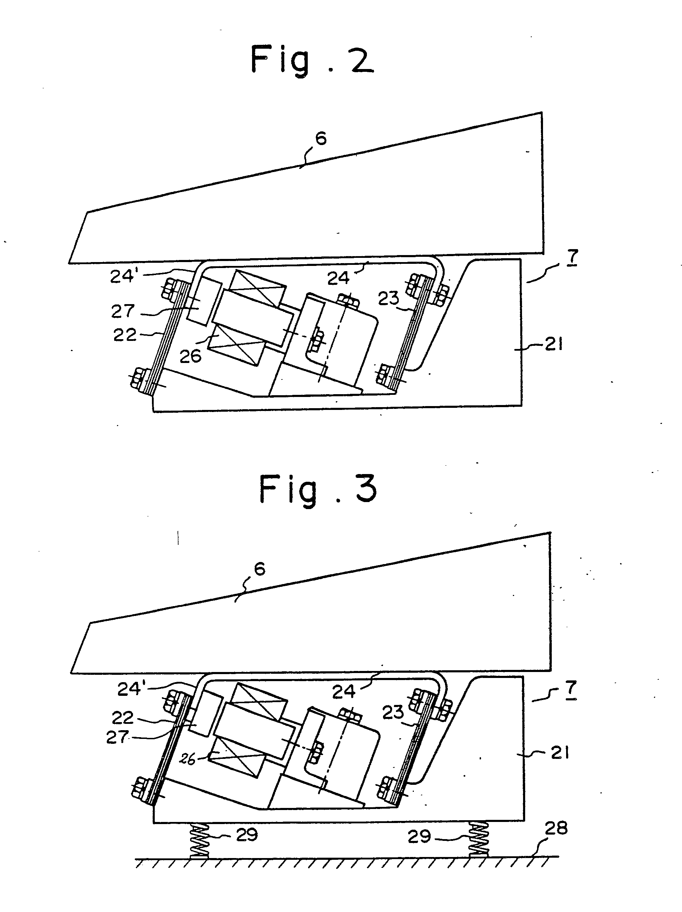

Figure 2 shows a vibratory conveyor including a supply trough.

In this conveyor, vibration spring plates 22, 23 are mounted in an inclined attitude to the front and rear parts of a base member 21, and a channel-shaped trough 6, the said supply trough, is mounted on these spring plates by means of a metallic fitting 24 extending longitudinally of the trough. An intermittently energized induction coil 26 is mounted on the base member 21, and a magnetic armature 27 is secured to a bent end portion 24' of the fitting 24 so as to be integrated with the spring plate 22 while facing the coil 26. When current is supplied intermittently to the coil 26, the armature 27 is attracted intermittently towards the coil 26 due to elastic deformation of the driving plate springs 22, 23. Thus the trough 6 is set into vibration with the left-hand side extremity of the trough, when viewed in Figure 2, being pitched downwardly during vibration owing to the arrangement of the spring plates 22, 23 and fitting 24. As a result of such vibration, the articles placed on the trough 6 may be transported forwardly, from right to left in Figure 2.

In the conventional conveyor mentioned above, the base member 21 is supported resiliently on a stationary support structure of the weighing apparatus by means of resilient elements in the hope that the vibration of the spring plates 22, 23 will be transmitted to the trough smoothly while no transmission of vibration to members other than the troughs will normally occur.

Figure 3 shows such conventional support means for the supply trough, like numerals being used to designate the same parts shown in Figure 2. These support means comprise coil springs 29 of a comparatively large spring constant, used for resiliently supporting the base member 21 of the conveyor on a stationary support structure 28 of the combinatorial weighing apparatus. However, when using such apparatus in which the conveyor is supported resiliently by coil springs 29 on the stationary support structure 28, conditions have been encountered in which the articles concerned are still not transported along the trough 6 in a sufficiently smooth fashion. This has been found to be due to the fact that the coil springs 29 may be subjected to bending stresses, in addition to elastic elongation and retraction, which stresses can cause frequency changes in the vibratory modes of the coil springs and thereby affect the transmission of the vibratory force to the trough.

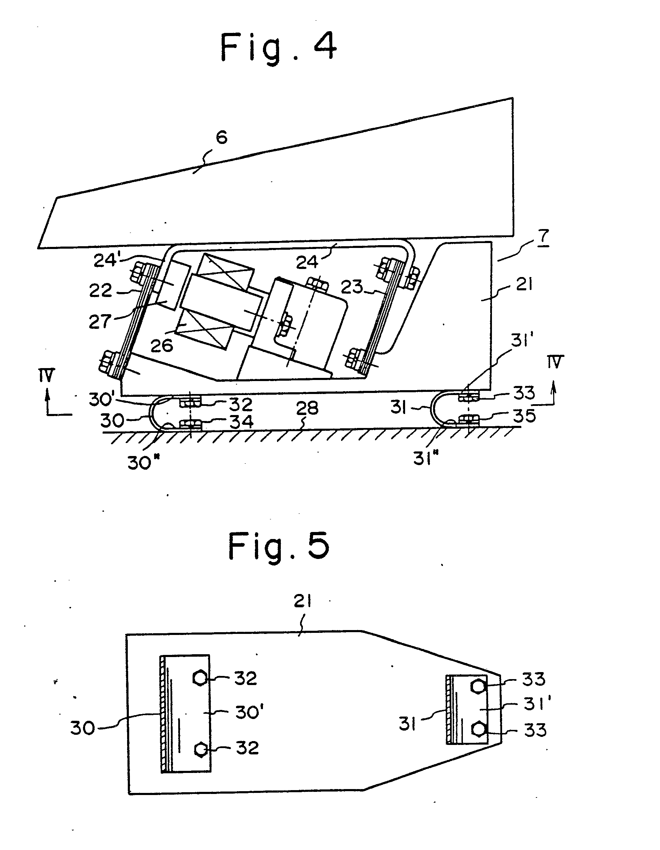

Figure 4 shows supply trough apparatus embodying the present invention, in side elevation, and Figure 5 shows part of that apparatus in underneath plan view corresponding to section line IV—IV in Figure 4. In these drawings, the numerals 30 and 31 designate U-shaped leaf-springs. The numerals 32, 33, 34 and 35 designate bolts for securing the leaf-springs 30 and 31 to the base member 21 and the support structure 28 of the apparatus.

In this arrangement the supporting leaf-springs 30 and 31 are formed by bending spring steel plates into a U-shaped configuration. The spring constants of the leaf-springs 30 and 31 are selected to be approximately equal to those of the coil springs 29 mentioned above. Respective first limbs 30' and 31' of the U-shaped leaf-springs 30 and 31 are respectively secured by bolts 32 and 33 to the base member 21, while the other limbs 30'' and 31'' of the U-shaped springs are respectively secured by bolts 34 and 35 to the support structure 28 of the weighing apparatus. It is to be noted that the bolts 32 through 35 may be replaced by nuts and stud bolts inserted into the base member 21 and the support structure 28 of the weighing apparatus.

In the above-described support means for the supply trough, the leaf-springs 30 and 31, used as resilient members or elements for resiliently supporting the vibratory conveyor on the support structure 28, are formed of U-shaped spring steel plates (leaf-springs). This enables some lateral bending effects that are encountered with the coil springs 29 to be avoided and the vibratory force of the vibration spring plates 22, 23 can be transmitted desirably smoothly to the trough 6, so that the articles can be transported more continuously and uniformly on the supply trough 6.

While the foregoing description has been made with reference to U-shaped supporting leaf-springs, 30 and 31, these springs need not be precisely U-shaped but may be in any desired form resembling the U-shaped configuration effectively.

As described above, the supply trough is supported by vibration spring plates mounted in the inclined position on the base member, and may be set into vibration by operation of a vibrator, whereby the articles may be transported on the supply trough. The trough is mounted on a stationary support structure of an automatic combination weighing apparatus or the like by means of resilient elements in the form of substantially U-shaped supporting leaf-springs. Respective first limbs of these U-shaped springs are secured to forward and rearward portions of the bottom surface of the base member, and respective second limbs of the springs are secured to the supporting structure of the automatic combination weighing apparatus or the like. The supply trough thus supported can operate in a near optimum vibrating condition.

## Claims

1. Vibratory conveyor apparatus, comprising a supply trough (6), a base member (21) on which the trough is mounted so as to be capable of longitudinal vibratory movement with respect thereto, vibrator means (26/27) operable to bring about such movement of the trough so as to cause articles thereon to move in a feeding direction therealong when the apparatus is in use, and a stationary support structure (28) on which the said base member is resiliently mounted, characterised in that the base member (21) is mounted on the support structure (28) by means of two leaf-springs (30, 31) which are spaced apart substantially longitudinally of the said trough (6), each leaf-spring having first and second limbs extending substantially longitudinally of the trough (6) from an intermediate portion of the leaf-spring, the respective first limbs (30', 31') of the leaf-springs being secured to the said base member (21), and the respective second limbs (30'', 31'') being secured to the said support structure (28).

2. Apparatus as claimed in claim 1, wherein the said leaf-springs are substantially U-shaped as viewed transversely of the trough, the said first limb of each of the springs being secured to a front or rear portion of a lower surface of the said base member (21).

3. Apparatus as claimed in claim 1 or 2, wherein the said leaf-springs are secured to the said base member (21) and the said support structure (28) with bolts.

4. Apparatus as claimed in claim 1, 2 or 3, wherein the trough is mounted on the said base member (21) by means of a metallic fitting (24), supporting the trough, and spring plates (22, 23) secured to both the metallic fitting and the base member (21).

5. Apparatus as claimed in claim 4, wherein a movable part (27) of the said vibrator means is secured to the said metallic fitting (24) for imparting vibratory movement thereto.

6. Apparatus as claimed in claim 5, wherein a second part (26) of the said vibrator means is secured to the base member (21).

7. Apparatus as claimed in claim 4, 5 or 6, wherein the said metallic fitting (24) extends longitudinally of the supply trough (6) and has opposite end portions which are bent away from the trough and are secured to said spring plates (22, 23).

## Patentansprüche

1. Schwingfördervorrichtung mit einer Förderrinne (6), einem Basisteil (21), auf dem die Rinne in bezug auf den Basisteil längsschwingend beweglich montiert ist, mit Vibratoren (26/27) zur Erzeugung solcher Bewegungen der Rinne, damit sich Artikel auf dieser entlang in einer Zuführungsrichtung bewegen, wenn die Vorrichtung in Betrieb ist und mit einer stationären Trägerkonstruktion (28), auf der der Basisteil (21) elastisch gelagert ist, dadurch gekennzeichnet, daß der Basisteil (21) mit Hilfe von zwei Blattfedern (30, 31) auf der Trägerkonstruktion (28) gelagert ist, die im wesentlichen in Längsrichtung der Rinne (6) mit gegenseitigem Abstand vorgesehen sind, daß jede Blattfeder einen ersten und einen zweiten Schenkel aufweist, die von einem Zwischenteil der Blattfeder im wesentlichen in Längsrichtung der Rinne (6) verlaufen und daß jeweils der erste Schenkel (30', 31') der Blattfedern an dem Basisteil (21) und jeweils der zweite Schenkel (30'', 31'') an der Trägerkonstruktion (28) befestigt sind.

2. Vorrichtung nach Anspruch 1, bei der die Blattfedern quer zur Rinne gesehen, im wesentlichen U-Form aufweisen und der erste Schenkel jeder Feder an einem vorderen oder hinteren Teil einer Unterfläche des Basisteils (21) befestigt ist.

3. Vorrichtung nach Anspruch 1 oder 2, bei der die Blattfedern mit Hilfe von Bolzen an dem Basisteil (21) und der Trägerkonstruktion (28) befestigt sind.

4. Vorrichtung nach Anspruch 1, 2 oder 3, bei der die Rinne an dem Basisteil (21) mit Hilfe eines die Rinne tragenden Metall-Fittings (24) und Federplatten (22, 23) montiert ist, die an dem Metall-Fitting und dem Basisteil (21) befestigt sind.

5. Vorrichtung nach Anspruch 4, bei der ein beweglicher Teil (27) des Vibrators an dem Metall-Fitting (24) befestigt ist, um diesem Vibrationsbewegungen zu erteilen.

6. Vorrichtung nach Anspruch 5, bei der ein zweiter Teil (26) des Vibrators an dem Basisteil (21) befestigt ist.

7. Vorrichtung nach Anspruch 4, 5 oder 6, bei der das Metall-Fitting (24) sich in Längsrichtung der Förderrinne (6) erstreckt und entgegengesetzte Endteile aufweist, die von der Rinne weggebogen und an den Federplatten (22, 23) befestigt sind.

## Revendications

1. Transporteur vibrant comprenant une auge (6) d'alimentation un élément (21) de base sur lequel est montée l'auge de façon à pouvoir être animée d'un mouvement vibratoire longitudinal par rapport à l'élément de base, un moyen (26, 27) formant vibreur mis en action pour imprimer un tel mouvement à l'auge de manière à provoquer le déplacement des articles présents dans le sens de l'alimentation le long de l'auge, lorsque le transporteur est en fonctionnement, et une structure (28) de support fixe sur laquelle l'élément de base est monté élastiquement, caractérisé en ce que l'élément (21) de base est monté sur la structure (28) de support au moyen de deux ressorts (30, 31) à lames qui sont éspacés l'un de l'autre dans le sens sensiblement longitudinal de l'auge (6), chacun de ces ressorts à lames ayant une première et une deuxième branches partant sensiblement dans le sens longitudinal de l'auge (6) depuis une partie intermédiaire du ressort à lame, les premières branches respectives (30', 31') des ressorts à lames étant fixées à l'élément (21) de base, tandis que les deuxièmes branches respectives (30'', 31'') sont fixées à la structure (28) de support.

2. Transporteur suivant la revendication 1, dans lequel les ressorts à lames sont sensiblement en forme de U quand on les considère transversalement à l'auge, la première branche de chacun des ressorts étant fixée à la partie avant ou arrière d'une face inférieure de l'élément (21) de base.

3. Transporteur suivant l'une des revendications 1 ou 2, dans lequel les ressorts à lames sont fixés à l'élément (21) de base et à la structure (28) de support au moyen de boulons.

4. Transporteur suivant l'une des revendications 1, 2 ou 3, dans lequel l'auge est montée sur l'élément (21) de base au moyen d'une fixation métallique (24) supportant l'auge et de lames élastiques (22, 23) montées à la fois sur la fixation métallique et sur l'élément (21) de base.

5. Transporteur suivant la revendication 4, dans lequel une partie mobile (27) du moyen formant vibreur est assujettie à la fixation métallique (24) pour imprimer un mouvement vibratoire à cette dernière.

6. Transporteur suivant la revendication 5, dans lequel une deuxième partie (26) du moyen formant vibreur est assujettie à l'élément (21) de base.

7. Transporteur suivant l'une des revendications 4, 5 ou 6, dans lequel la fixation métallique (24) est montée longitudinalement à l'auge (6) d'alimentation et présente des parties d'extrémité opposées qui sont repliées à l'opposé de l'auge et sont fixées aux lames élastiques (22, 23).

# Fig. 1

1

# Fig . 2

# Fig . 3

# Fig. 4

# Fig. 5

3